# EUROPÄISCHE PATENTSCHRIFT

(11) **EP 0 680 104 B1**
(45) Veröffentlichungstag und Bekanntmachung des Hinweises auf die Patenterteilung: **06.08.1997**
(21) Anmeldenummer: 95106274.4
(22) Anmeldetag: 26.04.1995
(51) Int. Cl.: H01M 2/12

(54) **Akkumulator mit Entgasungskanal**
Accumulator with venting channel
Accumulateur avec canal de ventilation

(30) Priorität: 29.04.1994 DE 9407172 U
(43) Veröffentlichungstag der Anmeldung: 02.11.1995
(73) Patentinhaber: HAGEN Batterie AG, D-59494 Soest (DE)
(72) Erfinder: Gürtler, Josef, Dr., D-59505 Bad Sassendorf-Weslarn (DE); Wulf, Ulrich, D-59494 Soest (DE); Scholz, Detlef, Dipl.-Ing., D-59494 Soest (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 305 822
- DE-U- 8 003 869
- DE-U- 9 015 535
- DE-U- 9 312 250
- DE-U- 9 407 172
- DE-U- 9 411 503

## Beschreibung

Die Erfindung betrifft einen eine Elektrolytflüssigkeit, wie Schwefelsäure, enthaltenden Akkumulator nach dem Oberbegriff des Anspruchs 1.

Bei einem bekannten Akkumulator dieser Art (DE 93 12 250 U) befindet sich am Übergang vom Entgasungskanal zum Seitenkanal lediglich ein Paar von Prallflächen, während der poröse Körper nahe der Gasauslaßöffnung des Seitenkanals in einem Ansatz der Abdeckplatte vorgesehen ist. Auf diese Weise können Undichtigkeiten zwischen der Abdeckplatte und dem Akkumulatorgehäuse die Wirksamkeit des porösen Körpers als Rückzündschutz beeinträchtigen und überdies zu einem ungehinderten Austreten von Säurenebel aus dem Innenraum des Akkumulators führen. Außerdem ist die Anbringung des porösen Körpers an der Abdeckplatte herstellungsmäßig problematisch.

Das Ziel der vorliegenden Erfindung besteht darin, den vorbekannten Akkumulator zu verbessern, und insbesondere dafür zu sorgen, daß auch bei einem etwaigen Undichtwerden der Abdeckung des Seitenkanals weder die Gefahr einer Rückzündung auftritt noch Säurenebel ungehindert nach außen treten kann.

Zur Lösung dieser Aufgabe sind die Merkmale des kennzeichnenden Teils des Anspruches 1 vorgesehen.

Da der poröse Körper bereits am Anfang des Seitenkanals angeordnet ist, besteht beim Vorliegen von Undichtigkeiten zwischen der Abdeckplatte und dem Akkumulatordeckel keine Gefahr, daß eine äußere Flamme in das Innere des Akkumulators durchschlägt. Außerdem werden die Säurenebel zunächst weitgehend von dem porösen Körper abgefangen, so daß sie bei einem Undichtwerden der Abdeckplatte zumindest nicht in größerem Umfange nach außen austreten können.

Nachdem der poröse Körper nach seinem Einbau einen Bestandteil des Akkumulatordeckels bildet, braucht er nicht an der Abdeckplatte befestigt zu werden, so daß diese nicht nur wesentlich einfacher und wirtschaftlicher herstellbar ist, sondern auch leicht gehandhabt und montiert werden kann.

Bei den Ausführungsformen nach Anspruch 2 ist gewährleistet, daß die Strömungsgeschwindigkeit der aus dem Innenraum des Akkumulators austretende Gase bereits im Bereich des porösen Körpers und danach stark herabgesetzt ist, so daß eine wirksame Abscheidung von Säuretröpfchen gewährleistet ist, die sich bevorzugt im unteren Teil des porösen Körpers sammeln und so den Gasdurchgang im oberen Teil kaum behindern. Sollte es zu sehr starken Abscheidungen von Säure aus dem austretenden Gas kommen, kann sich die flüssige Säure im unteren Teil des Seitenkanals sammeln. Der obere Bereich steht dann aber nach wie vor für die Gasführung voll zur Verfügung.

Bei dem Ausführungsbeispiel nach Anspruch 3 wird eine einwandfreie und platzsparende Halterung bzw. Unterbringung des porösen Körpers, der vorzugsweise die Form einer runden Scheibe hat, erreicht. Innerhalb des Gasdurchlaßspaltes erfolgt eine scharfe Umlenkung des Gasstromes, die das Abscheiden von Säuretröpfchen aus dem austretenden Gas begünstigt und so verhindert, daß Flüssigkeit bis zur Auslaßöffnung transportiert wird.

Eine besonders einfache Halterung des porösen Körpers in der Einfassung wird durch die Merkmale des Anspruches 4 gewährleistet.

Aufgrund der Ausbildung nach Anspruch 5 müssen die durch den Seitenkanal horizontal strömenden Gase vor dem Eintreten in die Gasauslaßöffnung erneut umgelenkt werden, was dem Abscheiden letzteres Bestandteile von Säuretröpfchen zugute kommt. Aufgrund der in den betreffenden Ansprüchen beschriebenen Ausbildung wird zuverlässig gewährleistet, daß lediglich von Säurenebel weitgehend befreites Gas aus dem Deckel des Akkumulators austritt. Weiter wird die Zurückhaltung von Säurenebel begünstigt.

Sowohl für die Wirksamkeit der Säurenebelabscheidung als auch eine einfache Herstellung und Montage sind die Merkmale der Ansprüche 6 bis 8 von Vorteil.

Eine einfache Montage der Abdeckplatte bei sicherer Abdichtung nach außen wird durch die Merkmale des Anspruches 9 gewährleistet.

Durch die Merkmale des Anspruches 10 wird der Seitenkanal in einen für die Aufnahme abgeschiedenen Säurenebels und den Gasdurchlaß bestimmten Teil unterteilt.

Die Erfindung wird im folgenden beispielsweise anhand der Zeichnung beschrieben; in dieser zeigt:
- Fig. 1: eine Draufsicht auf den Deckel eines erfindungsgemäßen Akkumulators,
- Fig. 2: einen Schnitt nach Linie II-II in Fig. 1,
- Fig. 3a: eine Ansicht des Akkumulatordeckels von Fig.1 in Richtung des Pfeiles III in Fig. 1 bei abgenommener Abdeckplatte,
- Fig. 3b: eine entsprechende Seitenansicht wie Fig. 3a, jedoch bei aufgesetzter Abdeckplatte, und
- Fig. 4: eine Innenansicht der Abdeckplatte nach Fig. 3b, im um 180° um die Achse 33 in Fig. 3b geschwenktem Zustand.

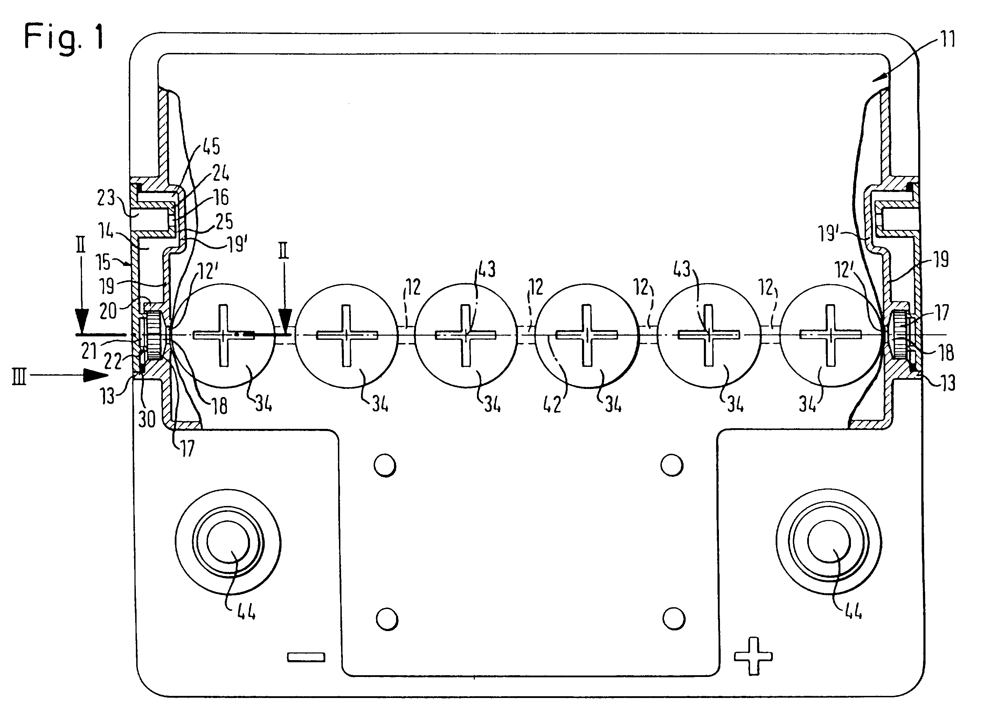

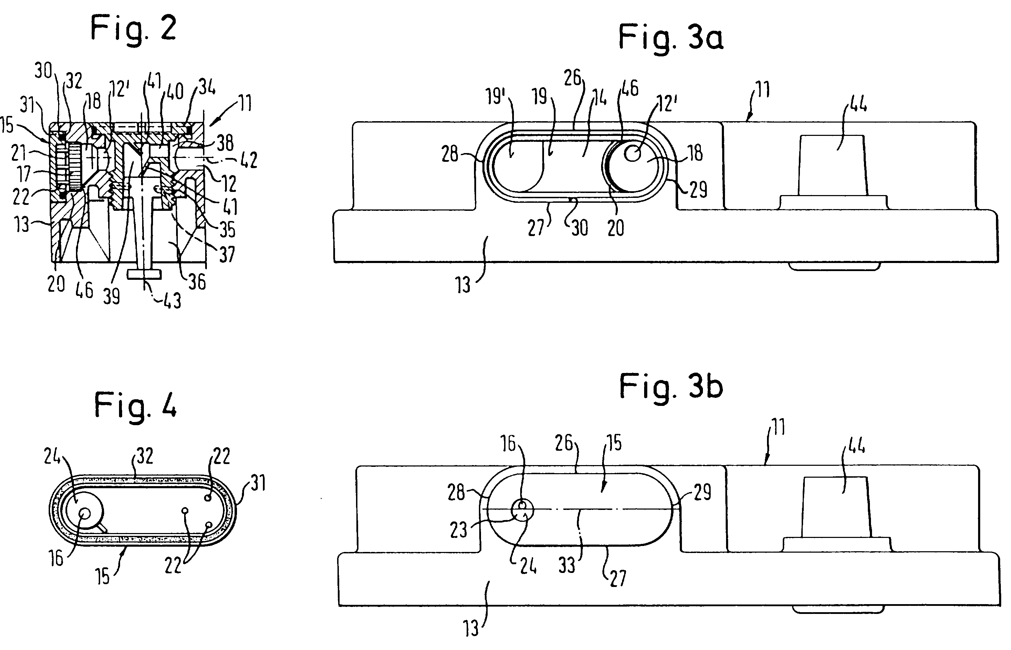

Nach Fig. 1 sind im rechteckigen Deckel 11 eines Pole 44 aufweisenden Akkumulators entlang der langen horizontalen Mittelachse 42 hintereinander und in definiertem Abstand sechs Schraubstopfen 34 angeordnet, welche nach Fig. 2 jeweils in eine Gewindebohrung 35 dicht eingeschraubt sind und mittels eines oberhalb des Gewindes angeordneten, in Figur 2 unmittelbar unter dem unteren Ende des Bezugsstriches der Zahl "34" erkennbaren O-Ringes den Innenraum 36 einer z.B. Schwefelsäure enthaltenden Akkumulatorzelle nach oben dicht abschließt. Die Gewindebohrungen 35 sind durch sich entlang der horizontalen Mittelachse 42 erstreckende geradlinige Entgasungskanäle 12 verbunden, die ihrerseits dadurch miteinander in Strömungsverbindung stehen, daß die Schraubstopfen 34 gemäß Fig. 2 oberhalb des Schraubgewindes 37 eine Umfangsausnehmung 38 aufweisen, die auf diametral gegenüberliegenden Seiten an je einen Entgasungskanal 12 angrenzt.

Die Schraubstopfen 34 besitzen nach Fig. 2 einen nach unten offenen Hohlraum 39, der mit dem Innenraum 36 der betreffenden Akkumulatorzelle in Verbindung steht und oben über eine Radialbohrung 40 in die Umfangsausnehmung 38 einmündet. Im Bereich des Überganges der Radialbohrung 40 in den Hohlraum 39 sind Schikanen bildende Zwischenwände 41 vorgesehen, die aus dem Innenraum 36 in die Umfangsausnehmung 38 fließende Gase zu mehrfachen Strömungsrichtungsänderungen zwingen, um mitgerissene Flüssigkeit zurückzuhalten.

Die horizontale Mittelachse 42 verläuft durch die vertikalen Mittelachsen 43 der Schraubstopfen 34.

Während die Entgasungskanäle 12 zwischen den Gewindebohrungen 35 in der Regel gleich lang sind, erstreckt sich von den beiden den Seitenwänden 13 des Deckels 11 am nächsten liegenden Gewindebohrungen 35 aus jeweils noch ein wesentlich kürzerer Entgasungskanal 12' bis zu einem sich trichterartig erweiternden Kanalbereich 18, an den in Richtung der Seitenwände 13 eine Umfangs-Einfassung 20 anschließt, in die ein kreisscheibenförmiger poröser Körper 17, z.B. eine Fritte, dicht eingesetzt ist. Die beiden ebenen Endflächen des porösen Körpers 17 sind vertikal angeordnet, so daß aus dem Entgasungskanal 12' in den trichterförmig erweiterten Kanalbereich 18 einströmendes Gas von der einen zur gegenüberliegenden Endfläche des porösen Körpers 17 hindurchströmen kann.

Die Einfassung 20 steht von der inneren Seitenwand 19 von zwei auf entgegengesetzten Seiten des Deckels 11 vorgesehenen Seitenkanälen 14 vor, die sich ausgehend von der Einfassung 20 in Richtung von den Akkumulatorpolen 44 weg horizontal erstrecken.

Die Seitenkanäle 14 weisen nach Fig. 3a eine ovalartige Form mit einem oberen und im Abstand darunter angeordneten unteren horizontalen geraden Abschnitt 26 bzw. 27 und zwei an deren Enden angeordneten halbkreisförmigen Abschnitten 28 bzw. 29 auf. Hierdurch entsteht ein in horizontaler Richtung länglicher Strömungsweg für aus dem Akkumulatorinneren austretende Gase.

In dem sich seitlich an die Einfassung 20 unmittelbar anschließenden Bereich weist der Seitenkanal 14 zunächst eine konstante Tiefe auf, um schließlich im Bereich des den halbkreisförmigen Abschnitt 28 aufweisenden Endes in eine sprungartige Vertiefung 45 überzugehen, die ihrerseits wieder eine konstante Tiefe aufweist. So entsteht ein zurückgesetzter Wandteil 19'.

Zum gas- und flüssigkeitsdichten Abschluß sind die Seitenkanäle 14 gemäß Fig. 3b durch eine in Fig. 4 von innen dargestellte Abdeckplatte 15 nach außen abgeschlossen. Die Abdeckplatte 15 weist eine zum Seitenkanal 14 und zu der angrenzenden Einfassung 20 komplementäre Form auf und besitzt nach den Fig. 2, 4 einen zum Deckel 11 hin vorspringenden Rand mit zum Deckel 11 hin vorstehenden Dichtmitteln 32. Bei auf den Seitenkanal 14 aufgesetzter Abdeckplatte 15 greift der Rand 31 der Abdeckplatte 15 in eine Stufenvertiefung 30 ein, die den der Seitenwand 13 des Deckels 11 zugewandten Rand des Seitenkanals 14 umgibt. Die Tiefe der Stufenvertiefung 30 ist so gewählt, daß die auf den Seitenkanal 14 aufgesetzte Abdeckplatte 15 bündig mit der Seitenwand 13 ist.

Im Bereich der zum Inneren des Deckels 11 hin vorgesehenen Vertiefung 19' der Seitenwand 19 besitzt die Abdeckplatte 15 eine zum Inneren des Deckels 11 vorspringende kreiszylindrische Einsenkung 23, in deren Boden 24 eine Gasauslaßöffnung 16 vorgesehen ist und deren Boden 24 sich in die Vertiefung 45 der Seitenwand 12 des Seitenkanals 14 hineinerstreckt und mit dem zurückgesetzten Wandteil 19' einen schmalen Gas-Durchlaßspalt 25 bildet.

Im Bereich des porösen Körpers 17 erstrecken sich von der Innenseite der Abdeckplatte 15 drei über den Umfang gleichmäßig verteilte Haltevorsprünge 22 bis zur äußeren Endfläche des porösen Körpers 17, wodurch dieser gegen eine Ringstufe 46 innerhalb der Einfassung 20 sicher festgehalten wird. Aufgrund dieser Ausbildung ist zwischen der Innenwand der Abdeckplatte 15 und der Einfassung 20 bzw. dem porösen Körper 17, d.h. zwischen den Haltevorsprüngen 22 ein Gasdurchlaßspalt 21 ausgebildet, der mit dem horizontal anschließenden Seitenkanal 14 in Strömungsverbindung steht.

Wie aus den Fig. 2 und 3a hervorgeht, mündet der Entgasungskanal 12' gegenüber der oberen Hälfte des kreisförmigen porösen Körpers 17, so daß der trichterförmig erweiterte Bereich unsymmetrisch in dem Sinne ausgebildet ist, daß die Trichterwände nach unten einen wesentlich größeren Winkel mit der Achse 42 als im oberen Bereich einschließen.

Auf diese Weise wird gewährleistet, daß das aus dem Entgasungskanal 12 in den trichterförmig erweiterten Bereich 18 eintretende Gas den porösen Körper 17 hauptsächlich im oberen Bereich durchströmt.

Der Innendurchmesser der Vertiefung 23 beträgt beim dargestellten Ausführungsbeispiel 5,9 mm.

Die Entgasung des beschriebenen Akkumulators geht wie folgt vor sich:
Wenn bei der Ladung des Akkumulators im Innenraum 36 (Fig.2) Gase entstehen, strömen diese durch den Hohlraum 39 des Schraubstopfens 34 an den Zwischenwänden 41 vorbei in den Radialkanal 40 und gelangen über die Umfangsausnehmung 38 in die angrenzenden Entgasungskanäle 12 bzw. 12'. Von dort strömen sie zu einem der beiden an den entgegengesetzten Seiten des Deckels 11 vorgesehenen trichterförmig erweiterten Kanalbereich 18 und treten durch die porösen Körper 17 hindurch. Durch die Zwischenwände 41 und den porösen Körper 17 werden im Gas enthaltene Säurenebel bereits zu einem großen Teil abgeschieden.

Das aus den porösen Körpern 17 austretende Gas wird im Bereich des Gasdurchlaßspaltes 21 um etwa 90° umgelenkt, um dann durch den sehr voluminösen Seitenkanal 14 zur Vertiefung 45 zu gelangen und durch den weiteren Gasdurchlaßspalt 25 in die Gasauslaßöffnung 16 einzutreten, von wo das Gas durch die Einsenkung 23 hindurch in die Umgebung gelangt. Vor dem Eintritt in die Gasauslaßöffnung 16 erfährt der Gasstrom erneut eine Umlenkung um 90°.

Aufgrund dieser Ausbildung wird gewährleistet, daß nach dem Durchtritt durch den porösen Körper 17 eventuell noch im Gas befindlicher Restsäurenebel innerhalb des Seitenkanals 14 abgeschieden wird, so daß sich die flüssige Säure an dessen Boden ansammelt und keine Gefahr besteht, daß Säurenebel durch die Gasauslaßöffnung 16 nach außen tritt. Hierzu trägt auch wesentlich bei, daß sich nach den Fig. 3b und 4 die Gasauslaßöffnung 16 im oberen Teil des Bodens 24 der Einsenkung 23 befindet.

Der Seitenkanal 14 läßt wegen Anordnung des porösen Körpers 17 im deutlichen Abstand von der Gasauslaßöffnung 16 eine gewünschte und wohldefinierte kleine Knallgasexplosion zu, wenn es im Bereich der Gasauslaßöffnung 16 zu einer Zündung kommen sollte. Diese für den Akkumulator und die Umgebung unschädliche definierte Explosion bläst zum einen eine vorhandene Flamme an der Gasauslaßöffnung 16 aus und verhindert zum anderen aufgrund des hohen Innendruckes im Seitenkanal 14 kurzzeitig das Nachströmen von weiterem zündfähigem Gemisch aus dem Innenraum 36. Der poröse Filterkörper 17 stellt also hier eine Grenze zwischen einem Explosionsraum (Seitenkanal 14) für die Ausbildung einer gezielten, jedoch unschädlichen Knallgasexplosion und einem durch die Räume 12, 18, 36, 39, 40 gebildeten, vor Explosion geschützten Bereich dar. Die kleine Explosion im Seitenkanal 14 wirkt beim Schutz dieses Bereiches mit, und die hierbei auftretende hohe Temperatur der Reaktionsgase wird durch das Anschmelzen von Kunststoffkörnern der porösen Filterscheibe 17 mitabgebaut. Die im Seitenkanal 14 eventuell stattfindende Knallgasexplosion ist also insgesamt als vorteilhaft anzusehen.

In die den Standarddurchmesser von 5,9 mm aufweisende zylindrische Einsenkung 23 können in üblicher Weise steckbare Teile wie z.B. Säureauffangbehälter, Verschlußstopfen oder ein Winkelstück mit Schlauchabgang eingesteckt werden, um Ladegase und/oder Säurenebel aus dem Inneren der Fahrzeugbatterie nach außen abzuführen.

Besonders bevorzugt ist es, in die Vertiefung 23 einen weiteren komplementär geformten porösen Körper einzustecken, wodurch eine mehrfache Sicherheit gegen Rückzündungen und das Austreten von Säurenebel gewährleistet werden könnte.

Ein wesentlicher Gesichtspunkt der Erfindung ist es also, daß im Anschluß an die Gasauslaßöffnung 16 die standardmäßige 5,9 mm-Zylindersteckeinsenkung 23 vorgesehen ist, ohne daß die Funktion der Rückzündungsverhinderung und des rechtzeitigen Abscheidens von Säurenebel beeinträchtigt wird.

Wichtig für die Funktion ist es außerdem, daß der Entgasungskanal 12' über den querschnittsmäßig wesentlich erweiterten Kanalbereich 18 in den porösen Körper 17 übergeht und daß dieser erweiterte Querschnitt innerhalb des Seitenkanals 14 bis zur Gasauslaßöffnung 16 weitgehend erhalten bleibt.

Der voluminöse Seitenkanal 14 wird so dimensioniert, daß er gleichzeitig im unteren Teil einen großen Säureauffangbehälter bildet, während der obere Bereich für eine weitgehend widerstandsarme Gasdurchleitung dient.

Für eine besonders zuverlässige und dichte Anordnung der Abdeckplatte 15 ist vorgesehen, daß diese mittels einer Heizelement-Ultraschall-Schweißung mit dem Material des Deckels 11 verbunden wird.

Gegenüber bekannten Anordnungen besteht ein wesentlicher Vorteil der erfindungsgemäßen Ausbildung darin, daß selbst bei beschädigter oder gar undicht verschweißter oder undichtwerdender Abdeckplatte 15 noch ein vollständiger Schutz gegen Rückzündungen gewährleistet ist, weil der poröse Körper 17 nicht in der Abdeckplatte 15, sondern innerhalb der einen Bestandteil des Deckels 11 bildenden Einfassung 20 angebracht ist. Ein weiterer Vorteil der Erfindung besteht darin, daß durch die integrale Bauweise vermieden wird, daß irgendwelche Teile von der Seitenwand 13 des Deckels 11 vorstehen.

Wichtig ist, daß die Seitenkanäle 14 sich vom porösen Körper 17 aus in einer von den Batteriepolen 44 abgewandten Richtung erstrecken, wodurch der endgültige Gasaustritt in die Umgebung in möglichst großem Abstand von den Batteriepolen 44 stattfindet, wo gegebenenfalls Funkenbildung stattfinden kann.

Von besonderem Vorteil ist es, daß der poröse Körper 17 sich am Eingang in den Seitenkanal 14 und nicht an dessen Ausgang befindet, wo lediglich eine einfache Bohrung in Form der Gasauslaßöffnung 16 vorgesehen ist.

## Patentansprüche

1. Eine Elektrolytflüssigkeit, wie Schwefelsäure, enthaltender Akkumulator, in dessen Deckel (11) im wesentlichen horizontal verlaufende Entgasungskanäle (12, 12') vorgesehen sind, der den Innenraum (36) einer oder mehrerer Zellen mit einem in einer Seitenwand (13) des Deckels (11) ausgebildeten, in horizontaler Richtung länglichen Seitenkanal (14) verbinden, der durch eine Abdeckplatte (15) dicht verschlossen ist, die in dem vom Anschluß an den Entgasungskanal (12) abgewandten Endbereich eine Gasauslaßöffnung (16) aufweist, und an dem ein gasdurchlässiger, poröser Körper (17) so angeordnet ist, daß das gesamte von dem Entgasungskanal (12) zum Seitenkanal (14) geförderte Gas durch den porösen Körper (17) hindurchtreten muß,
dadurch gekennzeichnet,
daß der poröse Körper (17) am Übergang des Entgasungskanals (12) in den Seitenkanal (14) angeordnet ist.

2. Akkumulator nach Anspruch 1, dadurch gekennzeichnet, daß an den Entgasungskanal (12') im Bereich des Überganges zum Seitenkanal (14) ein sich bis zur Querschnittsfläche des porösen Körpers (17) erweiternder Kanalbereich (18) anschließt, in dem der vorzugsweise scheibenförmig ausgebildete poröse Körper (17) zumindest im wesentlichen senkrecht zum Entgasungskanal (12') angeordnet ist, wobei sich insbesondere der Kanalbereich (18) vom Entgasungskanal (12') zum porösen Körper (17) hin trichterförmig erweitert und weiter vorzugsweise der Entgasungskanal (12') mit dem oberen Teil des porösen Körpers (17) ausgerichtet ist und der Kanalbereich (18) sich zum porösen Körper (17) hin nur seitlich und nach unten erweitert.

3. Akkumulator nach einem der vorhergehenden Ansprüche, dadurch gekennzeichnet, daß der poröse Körper (17) in einer von der inneren Seitenwand (19) des Seitenkanals (14) nach außen vorspringenden Einfassung (20) angeordnet ist und/oder daß zwischen der Außenseite des porösen Körpers (17) bzw. der Einfassung (20) und der Innenseite der Abdeckplatte (15) ein Gasdurchlaßspalt (21) vorgesehen ist.

4. Akkumulator nach einem der vorhergehenden Ansprüche, dadurch gekennzeichnet, daß sich von der Abdeckplatte (15) im Bereich des porösen Körpers (17) wenigstens ein und vorzugsweise mehrere Haltevorsprünge (22) bis zum porösen Körper (17) erstrecken und diesen festlegen.

5. Akkumulator nach einem der vorhergehenden Ansprüche, dadurch gekennzeichnet, daß die Abdeckplatte (15) im Bereich der Gasauslaßöffnung (16) eine nach innen gerichtete Einsenkung (23) aufweist, in deren Boden (24) sich die Gasauslaßöffnung (16) befindet, wobei insbesondere die Einsenkung (23) kreiszylindrisch ist und der eben ausgebildete Boden (24) senkrecht zur Zylinderachse verläuft, und/oder daß die Einsenkung (23) sich bis zur inneren Seitenwand (19) des Seitenkanals (14) erstreckt und der Boden (24) mit dieser einen sich zum im wesentlichen vertikal erstreckenden schmalen Gasdurchlaß-Spalt (25) bildet, wobei insbesondere die innere Seitenwand (19) des Seitenkanals (14) im Bereich der Gasdurchlaßöffnung (16) sprungartig etwas nach innen versetzt ist und so ein zurückgesetzter Wandteil (19') vorliegt und weiter vorzugsweise die Gasauslaßöffnung (16) relativ zur Mitte der Einsenkung (23) etwas nach oben versetzt ist.

6. Akkumulator nach einem der vorhergehenden Ansprüche, dadurch gekennzeichnet, daß der Seitenkanal (14) eine der Höhe des porösen Körpers (17) entsprechende Höhenerstreckung hat.

7. Akkumulator nach einem der vorhergehenden Ansprüche, dadurch gekennzeichnet, daß der Seitenkanal (14) in Seitenansicht die Form eines liegenden Ovals mit zwei horizontalen Geraden und zwei halbkreisförmigen Abschnitten (26, 27; 28, 29) oder eines liegenden Rechtecks mit zwei langen horizontalen und zwei kurzen vertikalen Seiten und die Abdeckplatte (15) eine entsprechende Form hat.

8. Akkumulator nach einem der vorhergehenden Ansprüche, dadurch gekennzeichnet, daß der Seitenkanal (14) mit Ausnahme des vertieften Bereiches um die Gasauslaßöffnung (16) und/oder des Ortes der Einfassung (20) eine konstante Tiefe aufweist.

9. Akkumulator nach einem der vorhergehenden Ansprüche, dadurch gekennzeichnet, daß die Abdeckplatte (15) in eine komplementäre Stufenvertiefung (30) rund um den Seitenkanal (14) eingesetzt ist, und zwar vorzugsweise derart, daß sie mit der Seitenwand (13) des Deckels (11) bündig ist, und/oder daß die Abdeckplatte (16) einen zum Seitenkanal (14) hin vorspringenden, rundumlaufenden Rand (31) aufweist, an dem vorzugsweise Dichtmittel (32) vorgesehen sind, und/oder daß die Abdeckplatte (16) mit dem Deckel (11) verklebt oder verschweißt ist.

10. Akkumulator nach einem der vorhergehenden Ansprüche, dadurch gekennzeichnet, daß der obere Teil des Seitenkanals (14) mit dem Entgasungskanal (12) etwa in gleicher Höhe und sein unterer Teil zumindest im wesentlichen unter dem Entgasungskanal (12) liegt.

## Claims

1. An accumulator containing an electrolyte liquid, such as sulphuric acid, the accumulator having a cover (11) in which substantially horizontally extending degassing channels (12, 12') are provided which connect the interior space (36) of one or more cells with an elongate side channel (14) extending in the horizontal direction and formed in a side wall (13) of the cover (11), the elongate side channel (14) being sealingly closed by a cover plate (15) provided with a gas outlet opening (16) in its end region remote from the connection to the degassing channel (12), and with a gas-permeable porous body (17) being arranged at the elongate side channel such that all the gas passing from the degassing channel (12) into the side channel (14) is forced to pass through the porous body (17), characterised in that the porous body (17) is arranged at the transition of the degassing channel (12) into the side channel (14).

2. Accumulator in accordance with claim 1, characterised in that a channel region (18) which widens out up to the cross-sectional area of the porous body (17) adjoins the degassing channel (12') in the region of the transition to the side channel (14), with the porous body (17), which preferably has a disc-shaped form, being arranged in the broadened channel region (18) at least substantially perpendicular to the degassing channel (12'), with the channel region (18) in particular widening out in a funnel-shaped manner from the degassing channel (12') to the porous body (17), and furthermore with the degassing channel (12') preferably being aligned with the upper part of the porous body (17) and with the channel region (18) only widening out towards the porous body (17) laterally and downwardly.

3. Accumulator in accordance with one of the preceding claims, characterised in that the porous body (17) is arranged in a surround (20) which projects outwardly from the inner side wall (19) of the side channel (14), and/or in that a gas transit gap (21) is provided between the outer side of the porous body (17) or the surround (20) and the inner side of the cover plate (15).

4. Accumulator in accordance with one of the preceding claims, characterised in that at least one and preferably a plurality of holding projections (22) extend from the cover plate (15) in the region of the porous body (17) up to the porous body (17) and fix it in position.

5. Accumulator in accordance with one of the preceding claims, characterised in that the cover plate (15) has an inwardly directed depression (23) in the region of the gas outlet opening (16), wherein the gas outlet opening (16) is located in the base (24) of the depression (23), wherein the depression (23) has in particular a circular cylindrical shape, and the flat base (24) extends perpendicular to the cylindrical axis, and/or in that the depression (23) extends up to the inner side wall (19) of the side channel (14) and the base (24) forms a narrow gas transit gap (25) with it which extends substantially vertically, wherein the inner side wall (19) of the side channel (14) is in particular offset inwardly somewhat in step-like manner in the region of the gas transit opening (16) so that a set-back wall portion (19') is present, and furthermore wherein the gas outlet opening (16) is preferably offset upwardly somewhat relative to the centre of the depression (23).

6. Accumulator in accordance with one of the preceding claims, characterised in that the side channel (14) has a vertical extent corresponding to the height of the porous body (17).

7. Accumulator in accordance with one of the preceding claims, characterised in that, in side view, the side channel (14) has the shape of a horizontally aligned oval with two horizontal straight sections and two semicircular sections (26, 27; 28, 29), or has the form of a horizontally aligned rectangle with two long horizontal sides and two short vertical sides, and in that the cover plate (15) has a corresponding shape.

8. Accumulator in accordance with one of the preceding claims, characterised in that the side channel (14) has a constant depth with the exception of the recessed location around the gas outlet opening (16) and/or of the location of the surround (20).

9. Accumulator in accordance with one of the preceding claims, characterised in that the cover plate (15) is fitted into a complementary step recess (30) extending around the side channel (14) and, indeed preferably, such that it is flush with the side wall (13) of the cover (11), and/or in that the cover plate (16) has a surrounding rim which projects towards the side channel (14), with sealing means (32) being preferably provided at this edge (31), and/or in that the cover plate (16) is adhesively bonded or welded to the cover (11).

10. Accumulator in accordance with one of the preceding claims, characterised in that the upper part of the side channel (14) lies at approximately the same height as the degassing channel (12) and its lower part lies at least substantially below the degassing channel (12).

## Revendications

1. Accumulateur contenant un liquide électrolytique, tel que de l'acide sulfurique, qui comporte dans son couvercle (11) des canaux de ventilation (12, 12') qui s'étendent sensiblement horizontalement, lesquels relient la cavité intérieure (36) d'une ou plusieurs cellules avec un canal latéral (14) réalisé dans une paroi latérale (13) du couvercle (11) et allongé dans la direction horizontale, ledit canal latéral étant refermé de façon étanche par une plaque de couverture (15) laquelle comporte dans la région terminale détournée du raccordement au canal de ventilation (12) une ouverture de sortie de gaz (16), et contre laquelle est agencé un corps poreux (17) perméable aux gaz, de telle sorte que la totalité du gaz transporté depuis le canal de ventilation (12) jusqu'au canal latéral (14) doit traverser le corps poreux (17),
caractérisé en ce que
le corps poreux (17) est agencé à la transition du canal de ventilation (12) jusque dans le canal latéral (14).

2. Accumulateur selon la revendication 1, caractérisé en ce que, au canal de ventilation (12') dans la région de la transition vers le canal latéral (14), se raccorde une région de canal (18) qui va en s'élargissant jusqu'à la surface de section transversale du corps poreux (17), dans laquelle est agencé le corps poreux (17), de préférence réalisé sous forme d'un disque, et agencé au moins sensiblement perpendiculairement au canal de ventilation (12'), et la région de canal (18) va en particulier en s'élargissant en formant un entonnoir depuis le canal de ventilation (12') jusqu'au corps poreux (17), et dans lequel le canal de ventilation (12') est de préférence aligné avec la partie supérieure du corps poreux (17), et la région de canal (18) va en s'élargissant uniquement vers le côté et vers le bas en direction du corps poreux (17).

3. Accumulateur selon l'une des revendications précédentes, caractérisé en ce que le corps poreux (17) est agencé dans une monture (20) qui fait saillie vers l'extérieur dans l'une des parois latérales intérieures (19) du canal latéral (14), et/ou en ce qu'il est prévu entre le côté extérieur du corps poreux (17), ou de la monture (20), et le côté intérieur de la plaque de couverture (15) une fente de traversée de gaz (21).

4. Accumulateur selon l'une des revendications précédentes, caractérisé en ce que, depuis la plaque de couverture (15) et dans la région du corps poreux (17) s'étendent au moins une et de préférence plusieurs saillies d'arrêt (22) jusqu'au corps poreux (17) et celles-ci fixent ce dernier.

5. Accumulateur selon l'une des revendications précédentes, caractérisé en ce que la plaque de couverture (15) présente dans la région de l'ouverture de sortie de gaz un creux (23) dirigé vers l'intérieur, au fond (24) duquel est située l'ouverture de sortie de gaz (16), et ledit creux (23) a en particulier la forme d'un cylindre circulaire et le fond (24) s'étend perpendiculairement à l'axe du cylindre, et/ou en ce que le creux (23) s'étend jusqu'à la paroi latérale intérieure (19) du canal latéral (14) et le fond (24) forme avec ladite paroi une fente de traversée de gaz (25) étroite qui s'étend sensiblement verticalement, dans lequel la paroi latérale intérieure (19) du canal latéral (14) est en particulier légèrement déportée en formant un ressaut vers l'intérieur dans la région de l'ouverture de traversée de gaz (16), et qu'il existe ainsi une partie de paroi (19') en retrait, et dans lequel l'ouverture de sortie de gaz (16) est en outre de préférence légèrement déportée vers le haut par rapport au milieu du creux (23).

6. Accumulateur selon l'une des revendications précédentes, caractérisé en ce que le canal latéral (14) présente une extension en hauteur qui correspond à la hauteur du corps poreux (17).

7. Accumulateur selon l'une des revendications précédentes, caractérisé en ce que le canal latéral (14) présente en vue latérale la forme d'un ovale couché avec deux droites horizontales et deux tronçons en forme de demi-cercles (26, 27 ; 28, 29), ou d'un rectangle couché avec deux côtés longs horizontaux et deux côtés courts verticaux, et en ce que la plaque de couverture (15) a une forme correspondante.

8. Accumulateur selon l'une des revendications précédentes, caractérisé en ce que le canal latéral (14), excepté la région en renfoncement autour de l'ouverture de sortie de gaz (16) et/ou de l'emplacement de la monture (20), présente une profondeur constante.

9. Accumulateur selon l'une des revendications précédentes, caractérisé en ce que la plaque de couverture (15) est mise en place dans un creux en gradin complémentaire (32) autour du canal latéral (14), et ceci de préférence de telle façon qu'elle soit en affleurement avec la paroi latérale (13) du couvercle (11), et/ou en ce que la plaque de couverture (16) comporte une bordure (31) en saillie en direction du canal latéral (14), et qui s'étend en périphérie, sur laquelle sont de préférence prévus des organes d'étanchéité (32), et/ou en ce que la plaque de couverture (16) est collée ou soudée sur le couvercle (11).

10. Accumulateur selon l'une des revendications précédentes, caractérisé en ce que la partie supérieure du canal latéral (14) avec le canal de ventilation (12) est située approximativement à la même hauteur, et sa partie inférieure est située au moins sensiblement au-dessous du canal de ventilation (12).
